# EUROPÄISCHE PATENTSCHRIFT

(11) **EP 1 651 502 B1**
(45) Veröffentlichungstag und Bekanntmachung des Hinweises auf die Patenterteilung: **30.01.2008**
(21) Anmeldenummer: 04740280.5
(22) Anmeldetag: 25.06.2004
(51) Int. Cl.: B62D 5/22

(54) **LENKGETRIEBE FÜR EIN KRAFTFAHRZEUG**
STEERING GEAR FOR A MOTOR VEHICLE
MECANISME DE DIRECTION POUR AUTOMOBILE

(30) Priorität: 05.08.2003 DE 10336628
(43) Veröffentlichungstag der Anmeldung: 03.05.2006
(73) Patentinhaber: ThyssenKrupp Presta SteerTec GmbH, 40476 Düsseldorf (DE)
(72) Erfinder: ROSENFELD, Albrecht, 72622 Nürtingen (DE); LECHNER, Dieter, 40470 Düsseldorf (DE); HORWATH, Jochen, 72669 Unterensingen (DE); MAUZ, Uwe, 73730 Esslingen (DE)
(74) Vertreter: LENZING GERBER
(86) Internationale Anmeldenummer: PCT/EP2004/006867
(87) Internationale Veröffentlichungsnummer: WO 2005/023625

(56) Entgegenhaltungen:
- DE-A- 2 361 075
- DE-A- 4 130 989
- GB-A- 2 328 191
- US-A- 6 039 334

## Beschreibung

Die vorliegende Erfindung betrifft ein Lenkgetriebe für ein Kraftfahrzeug mit den Merkmalen des Oberbegriffs des Anspruchs 1.

Gattungsgemäße Zahnstangen-Servolenkungen sind so aufgebaut, dass ein Lenkungsgehäuse in seiner Einbaulage quer im Fahrzeug angeordnet ist und dass in diesem Lenkungsgehäuse eine Zahnstange ebenfalls in Querrichtung des Kraftfahrzeugs verschieblich gelagert ist. Die Zahnstange wird einerseits über ein Lenkrad und eine Lenksäule mit einem mit der Zahnstange kämmenden Lenkritzel angetrieben. Andererseits ist seitlich von dem Eingriff des Ritzels in die Zahnstange beabstandet ein Servoantrieb mit einer Kolben-/Zylindereinheit angeordnet, der ebenfalls unmittelbar auf die Zahnstange wirkt. Die Zahnstange ist üblicherweise einstückig.

Der Abtrieb zu den gelenkten Rädern erfolgt bei gattungsgemäßen Servolenkungen über Spurstangen, die an den Stirnseiten der Zahnstange über Kugelgelenke angelenkt sind.

In einigen Fällen ist auch ein sogenannter Mittenabgriff vorgesehen, bei dem die Spurstangen im mittleren Bereich des Lenkgetriebes angelenkt sind.

Bei zahlreichen Neuentwicklungen von Kraftfahrzeugen ist eine wesentliche Vorgabe an die Konstrukteure, den verfügbaren Innenraum bei vorgegebenen Außenmaßen möglichst groß zu gestalten und um diese Aufgabe zu lösen, ist es erforderlich, die wesentlichen Komponenten des Kraftfahrzeugs möglichst kompakt auszuführen. Die Bemühungen, herkömmliche Zahnstangen-Servolenkungen kompakter auszuführen, sind jedoch dadurch begrenzt, dass bei einstückigen Zahnstangen mit koaxial nebeneinander angeordneten Zahnstangenteil und Hydraulikteil die Länge der Zahnstange mit dem daran angeordneten Hydraulikantrieb mindestens dem sechsfachen Hub der Lenkung in einer Richtung entsprechen muss. Hinzu kommt der Verfahrweg der Zahnstange, der bei der Konstruktion des Kraftfahrzeugs als Freiraum zu berücksichtigen ist.

Aus der deutschen Offenlegungsschrift DE 4130989 A1 ist eine Zahnstangen-Hilfskraftlenkung bekannt, bei der die Zahnstange und eine Kolbenstange eines parallel angeordneten Kolben-/Zylinderaggregats zur gemeinsamen achsparallelen Bewegung mit einander verbunden sind. Bei diesem Aufbau ist die stirnseitige Verbindung zwischen der Zahnstange und der Kolbenstange des Servoaggregats stark beansprucht.

Die deutsche Offenlegungsschrift 2361075 zeigt weiter eine Servovorrichtung für Lenkgetriebe von Kraftfahrzeugen und Schiffen, bei der die Zahnstange und das separat angeordnete Zylindergehäuse nicht fest mit einander verbunden sind. Dieser Aufbau ist mit einem Lenkungsspiel behaftet, welches für PKW und Nutzfahrzeuge unerwünscht ist.

Es ist deshalb Aufgabe der vorliegenden Erfindung, eine neue Lenkgetriebeanordnung zu schaffen, die kompakte Abmessungen und einen steifen, spielarmen Aufbau ermöglicht.

Diese Aufgabe wird von einem Lenkgetriebe mit den Merkmalen des Anspruchs 1 gelöst.

Weil die Zahnstange mit dem Zylinder in Axialrichtung fest verbunden ist, ergibt sich eine besonders spielarme Lenkung. Dann wird der Zylinder mit der Zahnstange bewegt, während die Kolbenstange gegenüber dem Fahrzeug im wesentlichen unbeweglich gelagert ist. Das Drehschieberventil kann dabei an Rahmen und Kolbenstange rahmenfest montiert sein, während Zylinder und Zahnstange relativ dazu verschieblich gelagert sind.

Die freien Enden der Zahnstangen sind bei einer Ausführungsform mit topfförmigen Hülsen gekapselt, die den erforderlichen Bewegungsraum der Zahnstange umschließen und nach außen abdichten. Sie können auch mit Schiebehülsen oder Faltenbälgen gekapselt sein, die geeignet sind, den axial neben der Zahnstange befindlichen Freiraum beispielsweise für einen Radeinschlag frei zu geben.

Das Drehschieberventil kann als Modul links oder rechts am Rahmen zu befestigen sein, so dass für rechts- und linksgelenkte Fahrzeuge nahezu alle Bauteile baugleich sein können.

Die Hydraulikflüssigkeit zur Betätigung des Servoantriebs kann zweckmäßig über die Stirnseiten (freien Enden) der Kolbenstange zugeführt werden. Ein Mittenabgriff für die zu betätigenden Spurstangen kann unmittelbar an dem Zylinder befestigt sein, was eine kompakte Bauweise weiter fördert.

Eine weitere Ausführungsform sieht vor, dass insgesamt drei parallele, axial beabstandete Stangen vorgesehen sind, nämlich eine Zahnstange, eine Kolbenstange und eine Führungsstange.

Nachfolgend werden Ausführungsbeispiele der vorliegenden Erfindung anhand der Zeichnung beschrieben. Es zeigen:
- Fig. 1:: eine Lenkung nach dem Stand der Technik mit Kopplung von Zahnstange und Kolbenstange in einem Querschnitt von oben;
- Fig. 2:: die Lenkung gem. Fig. 1 in einer perspektivischen Darstellung;
- Fig. 3:: eine Lenkung nach der vorliegenden Erfindung mit Kopplung von Zahnstange und Zylinder in einem Querschnitt von oben;
- Fig. 4:: die Lenkung gem. Fig. 3 in einer perspektivischen Darstellung; sowie
- Fig. 5:: eine schematische Darstellung einer zweiten Ausführungsform mit separater Führungsstange in einer Draufsicht.

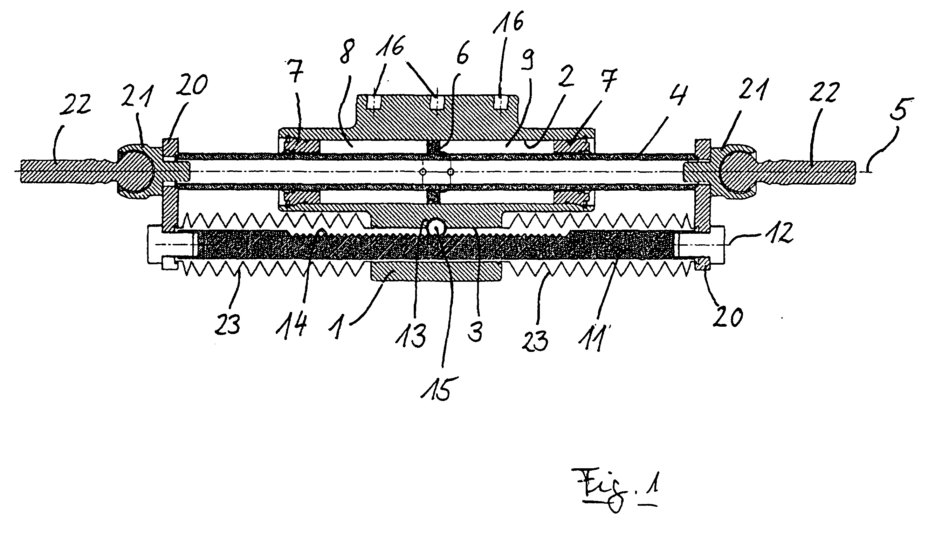

In der Figur 1 ist ein an sich bekanntes Lenkgetriebe veranschaulicht. Das Lenkgetriebe weist ein Lenkgehäuse 1 auf, welches eine in Querrichtung des Lenkgehäuses verlaufende Zylinderbohrung 2 und eine parallel zur Zylinderbohrung 2 verlaufende Zahnstangenbohrung 3 aufweist. In der Zylinderbohrung 1 ist eine Kolbenstange 4 in Richtung der Bohrungsachse 5 verschieblich angeordnet. Die Kolbenstange 4 trägt mittig einen Hydraulikkolben 6, der zusammen mit der Bohrung 2 und zwei stirnseitigen Führungs- und Dichtungselementen 7 einen linken Arbeitsraum 8 und einen rechten Arbeitsraum 9 begrenzt.

In der Zahnstangenbohrung 3 ist eine Zahnstange 11 entlang ihrer Zahnstangenachse 12 längs verschieblich angeordnet. Die Zahnstangenachse 12 verläuft parallel zu der Bohrungsachse 5. Weiter trägt das Lenkungsgehäuse 1 ein Ritzel 13, welches mit einem Verzahnungsabschnitt 14 der Zahnstange 11 kämmt und welches um eine senkrecht zur Zeichenebene orientierte Drehachse 15 drehbar in dem Lenkungsgehäuse 1 gelagert ist.

Das Lenkungsgehäuse 1 trägt an seiner der Zahnstangenbohrung 3 gegenüberliegenden Seite insgesamt 3 Gewindebohrungen 16, die zur Befestigung des Lenkungsgehäuses an dem Rahmen eines Kraftfahrzeugs dienen.

Die Kolbenstange 4 und die Zahnstange 11 sind im Bereich ihrer freien Ende über je eine Stirnplatte 20 miteinander verbunden. Die Stirnplatten 20 koppeln die beiden Bauelemente derart, dass sie sich in der Axialrichtung also in Richtung der Achsen 5 und 12, nicht gegeneinander verlagern können. Weiter trägt die Kolbenstange 4 an beiden freien Ende je eine Kugelpfanne 21, die wiederum jeweils eine darin gelagerte Spurstange 22 tragen. Die Spurstangen 22 werden schließlich bei der Montage der Lenkung im Kraftfahrzeug und im Betrieb so mit den Achsschenkeln der gelenkten Räder des Kraftfahrzeugs verbunden, dass eine Betätigung der Lenkung zu einem Verschwenken der gelenkten Räder führt.

Der Zahnstange 11 sind schließlich Faltenbälge 23 zugeordnet, die die freien Enden der Zahnstange 11 außerhalb der Bohrung 3 umgeben und nach außen dicht abschließen. In an sich bekannter Weise wird hierdurch eine Verschmutzung der Verzahnung 14 verhindert, die einerseits zu Verschleiß und Korrosion und andererseits zu einer Blockierung des Eingriffs zwischen dem Ritzel und der Verzahnung 14 führen könnte. Vorteilhaft ist hier, dass der Eingriff des Ritzels 13 in die Verzahnung 14 die Bohrung 3 nicht luftdicht verschließen muss, sodass ein Volumenausgleich zwischen den Faltenbälgen 23 bei einer Axialbewegung der Zahnstange 11 durch die Bohrung 3 hindurch erfolgen kann und keine separate Be- oder Entlüftung der Faltenbälge 23 vorgesehen sein muss.

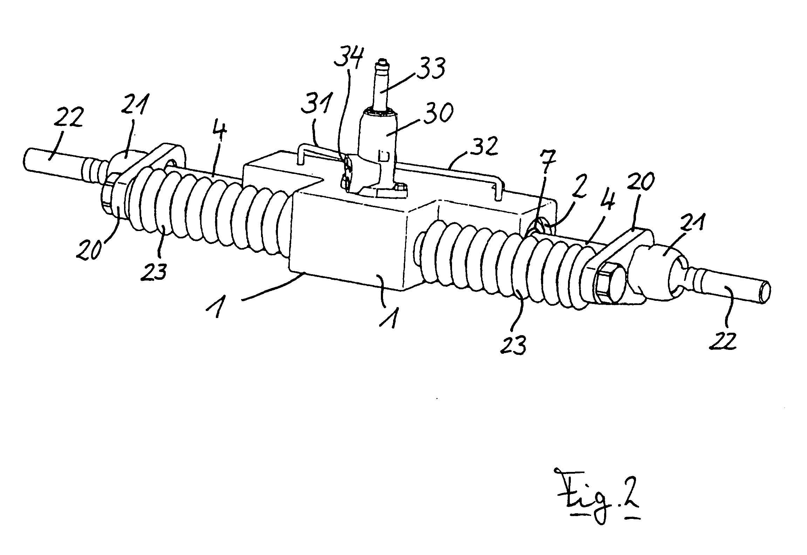

In der Figur 2 ist die Lenkung gemäß Figur 1 in einer perspektivischen Darstellung veranschaulicht. Gleiche Bauelemente tragen gleiche Bezugsziffern.

Es ist ersichtlich, dass an der Oberseite des Lenkungsgehäuses oberhalb des Ritzels 13 ein an sich bekanntes Drehschieberventil 30 angeordnet ist, von dem aus Hydraulikleitungen 31, 32 zu den Arbeitsräumen 8, 9 führen. Das Drehschieberventil 30 weist einen verzahnten Drehschieber 33 auf, der ebenfalls in üblicher Weise mit einer nicht dargestellten Lenksäule des Kraftfahrzeugs zu verbinden ist.

Die Montage der in soweit beschriebenen Servolenkung erfolgt derart, dass das Lenkungsgehäuse 1 im Bereich der Gewindebohrungen 13 etwa mittig im Bereich der gelenkten Achse eines Kraftfahrzeugs angebracht wird, wobei die Achsen 5 und 12 in Querrichtung des Kraftfahrzeugs, also horizontal und quer zur Fahrtrichtung angeordnet sind. Die Spurstangen 22 werden mit den Achsschenkeln der gelenkten Räder verbunden. Das Drehschieberventil 30 wird im Bereich von Anschlussbohrungen 34 mit einer Hydraulikpumpe und einem Rücklauf verbunden. Der Drehschieber 33 wird schließlich mit einer Vielzahnklemmung einer Lenksäule drehfest verbunden.

Wenn im Betrieb der Fahrer des mit der beschriebenen Lenkung ausgerüsteten Kraftfahrzeugs an einem Lenkrad über die Lenksäule einen Drehwinkel erzeugt, der dem Wunsch nach Änderung der Fahrtrichtung entspricht, so wird der Drehschieber 33 und damit auch das Ritzel 13 in an sich bekannter Weise verdreht. Ein Hydraulikstrom wird je nach Drehrichtung in die Leitungen 31 oder 32 eingeleitet, sodass der Druck in den Arbeitsräumen 8 oder 9 erhöht wird. Das Ritzel 13 bewirkt eine Verlagerung der Zahnstange 11 in Querrichtung, wobei diese Bewegung über die Stirnplatten 20 synchron mit einer entsprechenden Bewegung der Kolbenstange 4 und der Spurstangen 22 erfolgt. Der Hydraulikdruck in einem der beiden Arbeitsräume unterstützt diese Bewegung nach Art einer herkömmlichen Zahnstangen-Servolenkung.

Gegenüber herkömmlichen Lenkungen ergibt sich bei dieser Bauweise der Vorteil, dass der Verzahnungsabschnitt 14 beziehungsweise die gesamte Zahnstange 11 nicht koaxial zu der Kolbenstange 4 angeordnet ist. Der Bauraum in Querrichtung, also in Richtung der Achse 5 wird dadurch reduziert, sodass diese Lenkung geringer Restriktionen bei der Anordnung im Kraftfahrzeug erfordert. Ein weiterer Vorteil liegt in dem nicht erforderlichen externen Druckausgleich in den beiden Faltenbälgen 23. Schließlich wird die Montage dieser Lenkung einfacher und prozesssicherer, weil die im Verzahnungsbereich 14 relativ scharfkantige Zahnstange 11 nicht in den Bereich der Hydraulikdichtungen der Endstücke 7 eingeführt werden muss. Eine Beschädigung dieser Dichtungen während der Montage wird dadurch sicher ausgeschlossen.

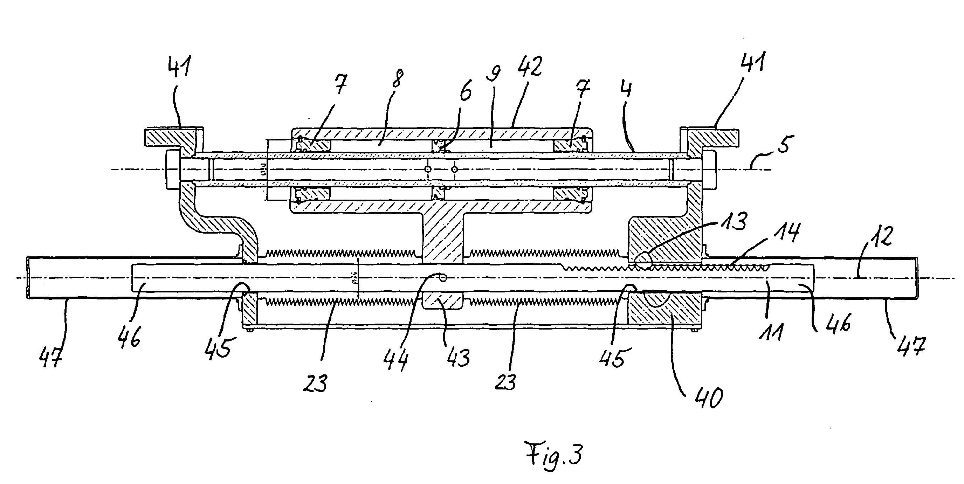

In der Figur 3 ist eine erfindungsgemäße Lenkung dargestellt. Die Darstellung entspricht der Ansicht gemäß Figur 1. Gleiche Bauelemente tragen wiederum gleiche Bezugsziffern.

Bei diesem Ausführungsbeispiel ist ein Lenkungsgehäuse 40 mit zwei Befestigungsbereichen 41 versehen. Das Lenkungsgehäuse 40 trägt die Kolbenstange 4 fest und unverschieblich, indem die Kolbenstange 4 nahe den Befestigungsbereichen 41 mit dem Lenkungsgehäuse 40 verschraubt ist. Die Kolbenstange 4 trägt auch hier einen Hydraulikkolben 6, der mit einem Zylinder 42 zwei Arbeitsräume 8 und 9 begrenzt. Der Zylinder 42 weist an seiner der Zahnstange 11 zugewandten Seite eine Brücke 43 auf, die in einer Gewindebohrung 44 fest mit der Zahnstange 11 verschraubt ist. Die Zahnstange 11 ist wiederum in zwei Gleitlagern 45 in dem Lenkungsgehäuse 40 axial verschieblich gelagert.

Die Zahnstange 11 weist bei diesem Ausführungsbeispiel zwei freie Enden 46 auf, die zum Schutz gegen Umwelteinflüsse mit festen, topfförmigen Hülsen 47 gekapselt sind.

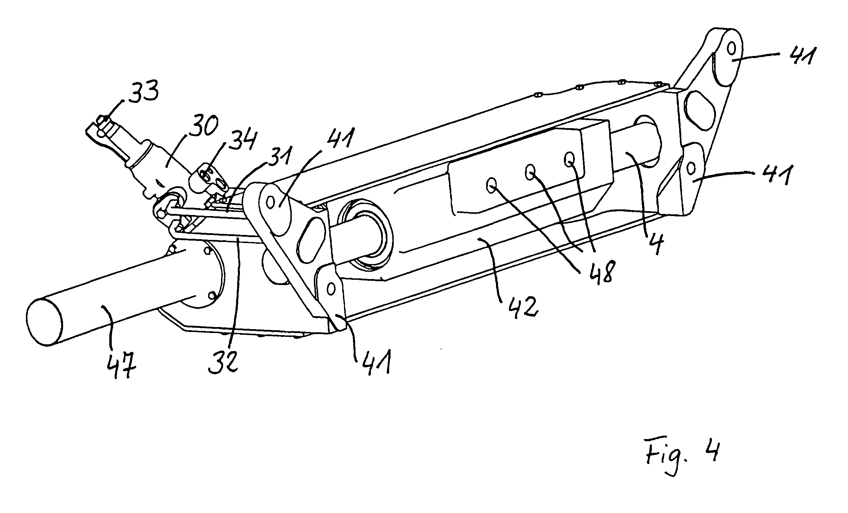

In der Figur 4 ist das Ausführungsbeispiel gemäß Figur 3 in einer perspektivischen Darstellung weiter veranschaulicht. In dieser Darstellung ist erkennbar, dass das Ritzel 13 ebenso wie im ersten Ausführungsbeispiel Teil einer Drehschieberanordnung 30, 33 ist. Weiter ist erkennbar, dass der Zylinder 42 bei dieser Ausführungsform einen Flansch mit Gewindebohrungen 48 trägt, an die bei der Montage nicht näher dargestellte Spurstangen angeschraubt werden können.

In der Praxis wird die Lenkung nach diesem Ausführungsbeispiel im Bereich der Anschlussflansche 41 mit dem Rahmen des Kraftfahrzeugs verschraubt. Die Spurstangen, die zu den gelenkten Rädern führen, werden mit einem entsprechenden Gelenkteil an den Zylinder 42 im Bereich der Bohrungen 48 angeschraubt. Bei einer Drehung des Ritzels 13 wird über den Eingriff des Ritzels in den Verzahnungsbereich 14 die Zahnstange 11 in Querrichtung, also in Richtung der Achse 12 verlagert. Durch die starre Befestigung der Zahnstange 11 über die Brücke 43 an dem Zylinder 42 wird dieser ebenfalls in Querrichtung mit bewegt, während die Kolbenstange 4 relativ zum Lenkungsgehäuse 40 und damit relativ zum Rahmen des Kraftfahrzeugs ruht. Ein aus der Verdrehung des Drehschieberventils 30 resultierendes hydraulisches Steuersignal wird über die Hydraulikleitungen 31 und 32 an die Arbeitsräume 8 bzw. 9 weitergeleitet, um durch Druckerhöhung in dem jeweiligen Arbeitsraum eine Servounterstützung zu gewährleisten. Dabei kann vorteilhaft die Zuführung des Hydraulikfluids aus den Leitungen 31 und 32 über das Innere der Kolbenstange 4 erfolgen.

Konstruktiv bietet auch dieses Ausführungsbeispiel den Vorteil, dass die Zahnstange 11 und die Kolbenstange 4 in Radialrichtung voneinander beabstandet sind und nicht koaxial in Querrichtung des Kraftfahrzeugs nebeneinander angeordnet sind. Der erforderliche Bauraum in Querrichtung wird durch diese Anordnung erheblich verringert. Zum anderen ist bei diesem Ausführungsbeispiel ein Mittenabgriff im Bereich der Gewindebohrungen 48 ausgesprochen einfach zu realisieren.

Da das Lenkungsgehäuse und die Bauelemente, insbesondere Drehschieber und Zahnstange einen weitgehend modularen Aufbau erlauben, sind auch die erforderlichen Änderungen für die beiden Varianten Rechtslenker/Linkslenker nur gering.

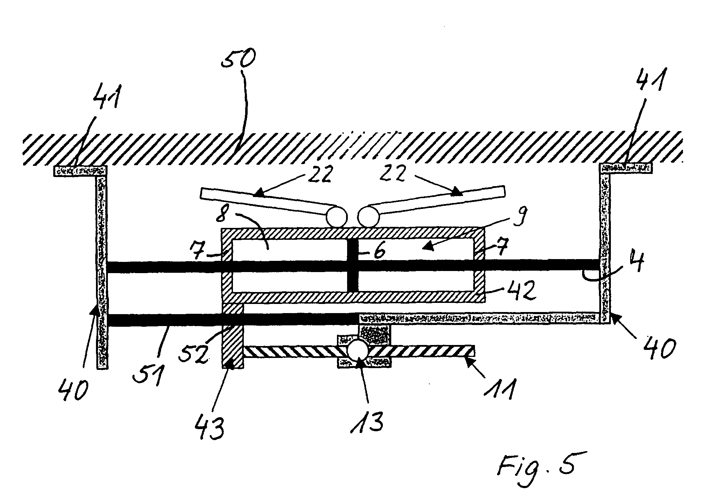

Die Figur 5 zeigt schließlich ein zweites Ausführungsbeispiel in einer schematischen Darstellung entsprechend der Ansicht aus Figur 1 und Figur 3.

Bei diesem Ausführungsbeispiel ist ein Lenkungsgehäuse 40 im Bereich von Flanschen 41 an einen Rahmen 50 angeschraubt. Das Lenkungsgehäuse 40 trägt die Kolbenstange 4, auf der der Zylinder 42 verschieblich angeordnet ist. Der Aufbau des Zylinders 42 entspricht im wesentlichen demjenigen aus Figur 3. Die Brücke 43 zu der Zahnstange 11 ist allerdings außermittig am Zylinder 42 angebracht. Im Unterschied zu den bisherigen Ausführungsformen ist eine zusätzliche Führungsstange 51 parallel zu der Kolbenstange 4 und der Zahnstange 11 vorgesehen, die in einer Gleitführung 52 dazu angerichtet ist, an der Brücke 43 auftretende Kippmomente aufzufangen. Die Zahnstange 11 ist durch diesen Aufbau frei von Kippmomenten. Die Zahnstange 11 kann deshalb im wesentlichen in der Länge auf den Hub des Lenkgetriebes beschränkt werden, während bei dem Ausführungsbeispielen gemäß Figur 1-4 die Länge der Servolenkung größer ist.

Im Betrieb arbeitet dieses Lenkgetriebe entsprechend dem bisher beschriebenen Aufbau. Ein am Ritzel 13 eingeleitetes Drehmoment führt zu einer Verlagerung der Zahnstange 11 in Querrichtung. Die Zahnstange 11 nimmt dabei über die Brücke 43 den Zylinder 42 mit. Die in der Bauart Mittenabgriffs am Zylinder 42 angeordneten Spurstangen 22 leiten die Bewegung an nicht dargestellte gelenkte Räder eines Kraftfahrzeugs weiter. Ein mit dem Ritzel 13 verbundenes Drehschieberventil erzeugt einen Hydraulikstrom in einen der beiden Arbeitsräume 8 oder 9, der im Wesentlichen proportional zu dem an dem Lenkrad eingeleiteten Drehmoment eine Servounterstützung zur Verfügung stellt. Kippmomente werden im Gleitlager 52 aufgenommen und über die Führungsstange 51 und das Lenkgehäuse 40 an den Rahmen des Kraftfahrzeugs 50 weitergeleitet. Die Kolbenstange 4 und die Führungsstange 51 sind fest mit dem Lenkgehäuse 40 verbunden, während die Zahnstange 11 in Querrichtung verfahrbar ist. Diese drei Bauelemente sind achsparallel und radial voneinander beabstandet angeordnet.

Das zweite Ausführungsbeispiel ist in der Figur 5 nur rein schematisch dargestellt. Die genaue Ausführung wird sich ähnlich gestalten wie bei dem Ausführungsbeispiel nach den Figuren 3 und 4.

## Patentansprüche

1. Lenkgetriebe miteinem Lenkgehäuse,
einer eine Axialrichtung definierenden Zahnstange (11), die mit einem Lenkritzel (13) kämmt,
mit einem hydraulischen Servoantrieb
mit einer einen Kolben (6), eine in Axialrichtung verlaufende Kolbenstange (4) und einen Zylinder (42) aufweisenden Kolben/Zylindereinheit, wobei die Zahnstange (11) und die Kolbenstange (4) in Axialrichtung parallel zueinander und quer zu der Axialrichtung voneinander beabstandet angeordnet sind,
**dadurch gekennzeichnet, dass**
die Zahnstange (11) mit dem Zylinder (42) in Axialrichtung fest verbunden ist .

2. Lenkgetriebe nach Anspruch 1, **dadurch gekennzeichnet, dass** die freien Enden der Zahnstangen mit vorzugsweise topfförmigen Hülsen gekapselt sind, die den Bewegungsraum der Zahnstange umschließen und nach außen abdichten.

3. Lenkgetriebe nach einem der vorhergehenden Ansprüche, **dadurch gekennzeichnet, dass** die freien Enden der Zahnstangen mit Schiebehülsen oder Faltenbälgen gekapselt sind, die den axial neben der Zahnstange befindlichen Freiraum beispielsweise für einen Radeinschlag frei zu geben.

4. Lenkgetriebe nach einem der vorhergehenden Ansprüche, **dadurch gekennzeichnet, dass** das Drehschieberventil als Modul in einem außermittig am Rahmen liegenden Bereich befestigt ist.

5. Lenkgetriebe nach einem der vorhergehenden Ansprüche, **dadurch gekennzeichnet, dass** die Kolbenstange gegenüber dem Fahrzeug im wesentlichen unbeweglich gelagert ist.

6. Lenkgetriebe nach einem der vorhergehenden Ansprüche, **dadurch gekennzeichnet, dass** Mittenabgriff für die zu betätigenden Spurstangen unmittelbar an dem Zylinder befestigt ist.

7. Lenkgetriebe nach einem der vorhergehenden Ansprüche, **dadurch gekennzeichnet, dass** Hydraulikfluid zur Betätigung des Servoantriebs über die Stirnseiten (freien Enden) der Kolbenstange zugeführt wird.

8. Lenkgetriebe nach einem der vorhergehenden Ansprüche, **dadurch gekennzeichnet, dass** insgesamt drei parallele, axial beabstandete Stangen vorgesehen sind, nämlich Zahnstange, Kolbenstange und Führungsstange.

9. Lenkgetriebe nach einem der vorhergehenden Ansprüche, **dadurch gekennzeichnet, dass** Spurstangen an den Stirnseiten der Kolbenstange angelenkt sind.

## Claims

1. Steering gear having a steering housing,
a rack (11), which defines an axial direction and meshes with a steering pinion (13),
having a hydraulic servo-drive
having a piston/cylinder unit comprising a piston (6), a piston rod (4), which extends in the axial direction, and a cylinder (42), the rack (11) and the piston rod (4) being arranged parallel to one another in the axial direction and spaced apart from one another transversely with respect to the axial direction,
**characterised in that**
the rack (11) is fixedly connected to the cylinder (42) in the axial direction.

2. Steering gear according to Claim 1, **characterised in that** free ends of the racks are encased by preferably cup-shaped sleeves which enclose and outwardly seal the movement space of the rack.

3. Steering gear according to one of the preceding claims, **characterised in that** the free ends of the racks are encased by sliding sleeves or bellows which to free the free space situated axially next to the rack, for example for a steer angle.

4. Steering gear according to one of the preceding claims, **characterised in that** the rotary slide valve is fastened as a module in a region located eccentrically on the frame.

5. Steering gear according to one of the preceding claims, **characterised in that** the piston rod is mounted substantially immovably with respect to the vehicle.

6. Steering gear according to one of the preceding claims, **characterised in that** centre take-off for the track rods to be actuated is fastened directly to the cylinder.

7. Steering gear according to one of the preceding claims, **characterised in that** hydraulic fluid for actuating the servo-drive is supplied via the end sides (free ends) of the piston rod.

8. Steering gear according to one of the preceding claims, **characterised in that** in total three parallel, axially spaced-apart rods, namely a rack, a piston rod and a guide rod, are provided.

9. Steering gear according to one of the preceding claims, **characterised in that** track rods are articulated to the end sides of the piston rod.

## Revendications

1. Mécanisme de direction avec un boîtier de direction, une crémaillère (11) définissant une direction axiale qui vient en prise avec un pignon de direction (13),
avec une servocommande hydraulique
avec un ensemble piston/cylindre comportant un piston (6), une tige de piston (4) s'étendant la direction axiale et un cylindre (42), dans lequel la crémaillère (11) et la tige de piston (4) sont disposées à distance l'une de l'autre parallèlement l'une par rapport à l'autre dans la direction axiale et perpendiculairement à la direction axiale ;
**caractérisé en ce que**
la crémaillère (11) est raccordée fixement au cylindre (42) dans la direction axiale.

2. Mécanisme de direction selon la revendication 1, **caractérisé en ce que** les extrémités libres des crémaillères sont encapsulées, de préférence, avec des manchons en forme de coupelle qui entourent l'espace de travail de la crémaillère et le rendent étanche vis-à-vis de l'extérieur.

3. Mécanisme de direction selon l'une quelconque des revendications précédentes, **caractérisé en ce que** les extrémités libres des crémaillères sont encapsulées avec des manchons coulissants ou des soufflets qui libèrent l'espace de dégagement se trouvant à côté de la crémaillère, par exemple pour un braquage de roue.

4. Mécanisme de direction selon l'une quelconque des revendications précédentes, **caractérisé en ce que** le distributeur à tiroir rotatif est fixé sous forme de module dans une zone décentrée sur le châssis.

5. Mécanisme de direction selon l'une quelconque des revendications précédentes, **caractérisé en ce que** la tige de piston est logée de manière sensiblement immobile par rapport au véhicule.

6. Mécanisme de direction selon l'une quelconque des revendications précédentes, **caractérisé en ce qu'**une prise médiane pour les barres d'accouplement à actionner est fixée directement sur le cylindre.

7. Mécanisme de direction selon l'une quelconque des revendications précédentes, **caractérisé en ce que** le fluide hydraulique pour l'actionnement de la servocommande est alimenté par les côtés frontaux (extrémités libres) de la tige de piston.

8. Mécanisme de direction selon l'une quelconque des revendications précédentes, **caractérisé en ce qu'**il est prévu au total trois tiges parallèles à distance les unes des autres dans le sens axial, à savoir une crémaillère, une tige de piston et une tige de guidage.

9. Mécanisme de direction selon l'une quelconque des revendications précédentes, **caractérisé en ce que** les barres d'accouplement sont articulées sur les côtés frontaux de la tige de piston.
